# DEMANDE DE BREVET EUROPEEN

(11) **EP 1 422 114 A1**
(43) Date de publication de la demande: **26.05.2004**
(21) Numéro de dépôt: 03104267.4
(22) Date de dépôt: 19.11.2003
(51) Int. Cl.: B60R 25/02

(54) **Antivol perfectionné pour véhicule automobile destiné, en particulier, à commander le verrouillage d'une colonne de direction du véhicule.**

(30) Priorité: 21.11.2002 FR 0214594
(71) Demandeur: Valeo Securité Habitacle S.A.S., 94042 Créteil (FR)
(72) Inventeur: Giacomin, Fabrice, F-94042 Créteil (FR)
(74) Mandataire: Hervouet, Sylvie

(57) **Abrégé**

Cet antivol comprend un stator, un rotor (14) monté tournant dans le stator entre des première et seconde positions angulaires extrêmes, un pêne (20) de verrouillage d'une colonne de direction du véhicule, déplaçable en translation entre des positions correspondant à des états libéré et verrouillé de la colonne, et des moyens de transformation du mouvement de rotation du rotor (14) en mouvement de translation du pêne (20), couplant ces rotor (14) et pêne (20), comprenant une came (22) destinée à coopérer, en fonctionnement normal, avec une contre-came principale (24) rappelée élastiquement en appui sur le profil de la came (22). Le profil de la came (22) comporte au moins une première encoche (36) destinée à coopérer avec la contre-came principale (24) pour indexer la position du rotor (14) sur une course angulaire de ce rotor (14) ne modifiant pas l'état de la colonne.

## Description

La présente invention concerne un antivol perfectionné pour véhicule automobile destiné, en particulier, à commander le verrouillage d'une colonne de direction du véhicule.

On connaît déjà dans l'état de la technique, notamment d'après FR-A-2 788 477 (FR-99 00401) ou FR-A-2 799 426 (FR-99 11635), un antivol pour véhicule automobile, du type comprenant :
- un stator,
- un rotor monté tournant dans le stator entre des première et seconde positions angulaires extrêmes,
- un pêne de verrouillage d'une colonne de direction du véhicule, déplaçable en translation entre des positions correspondant à des états libéré et verrouillé de la colonne, et
- des moyens de transformation du mouvement de rotation du rotor en mouvement de translation du pêne, couplant ces rotor et pêne, comprenant une came destinée à coopérer, en fonctionnement normal, avec une contre-came principale rappelée élastiquement en appui sur le profil de la came.

Outre la commande du verrouillage de la colonne de direction, l'antivol du type ci-dessus est destiné à commander le démarrage d'un moteur de ce véhicule. A cet effet, le rotor actionne un commutateur électrique à plusieurs positions. Le rotor peut être placé, successivement, dans une première position angulaire extrême de repos, dite position "stop", une position "accessoires", une position "marche" et une seconde position angulaire extrême, opposée à la première, dite position "démarrage".

Le pêne est généralement déplaçable entre une position de libération de la colonne de direction, dite position rentrée, et une position de verrouillage de la colonne de direction, dite position sortie. On n'autorise habituellement la position sortie du pêne que lorsque le rotor est en positon "stop" et la clé retirée. Par contre, lorsque le rotor est dans une position distincte de la position "stop", le pêne est maintenu en position rentrée.

Habituellement, les différentes positions du rotor sont indexées à l'aide de moyens comprenant une bille montée coulissante dans un trou borgne radial ou axial ménagé dans le rotor. La bille est déplaçable dans le trou borgne entre une position escamotée dans le rotor et une position saillante d'emboîtement partiel dans un enfoncement d'indexation ménagé dans le contour interne du stator.

Le stator est généralement muni de trois enfoncements d'indexation destinés à coopérer avec la bille pour indexer respectivement les positions "stop", "accessoires" et "marche" du rotor.

La bille est rappelée élastiquement vers sa position saillante, au contact de la surface interne du stator, par un ressort de poussée logé dans le trou borgne.

De façon classique, la came est liée en rotation au rotor.

Or, d'une part, le ressort de rappel de la bille d'indexation, et d'autre part, les enfoncement d'indexation ménagés dans le stator, sont susceptibles de limiter dans certains cas l'efficacité du guidage en rotation du rotor et de la came dans le stator.

Par ailleurs, pour accéder au trou borgne du rotor afin d'y introduire la bille d'indexation lors du montage de l'antivol, le stator est muni d'un orifice sensiblement radial de passage de la bille. Le trou borgne et l'orifice de passage impliquent des opérations d'usinage du rotor et du stator relativement complexes.

L'invention a notamment pour but de proposer un antivol du type précité muni de moyens d'indexation de la position du rotor efficaces et simples à fabriquer.

A cet effet, l'invention a pour objet un antivol pour véhicule automobile, du type précité, caractérisé en ce que le profil de la came comporte au moins une première encoche destinée à coopérer avec la contre-came principale pour indexer la position du rotor sur une course angulaire de ce rotor ne modifiant pas l'état de la colonne.

La contre-came principale, rappelée élastiquement en appui sur le profil de la came, coopère avec la première encoche pour indexer efficacement la position du rotor. Cet agencement évite donc, d'une part, d'avoir à rapporter une bille d'indexation dans un trou borgne du rotor et, d'autre part, d'avoir à ménager des enfoncements d'indexation dans le contour interne du stator, comme dans l'état de la technique. Le guidage en rotation du rotor dans le stator n'est donc pas perturbé et le guidage de la came est amélioré.

De préférence, entre ses première et seconde positions extrêmes, dites positions "stop" et "démarrage", le rotor peut être placé dans une première position angulaire intermédiaire, dite position "accessoires", indexée par la première encoche.

De préférence également, entre ses première position intermédiaire et seconde position extrême, le rotor peut être placé dans une seconde position angulaire intermédiaire, dite position "marche", la came comportant une seconde encoche d'indexation munie d'un premier bord angulaire indexant la position "marche".

Avantageusement, la came a une forme générale de révolution, le profil de la came évoluant axialement et comportant une partie dite de libération, destinée à coopérer avec la contre-came principale pour maintenir la colonne dans un état libéré, cette partie de libération étant délimitée par une surface sensiblement transversale de la came, dite face de libération, dans laquelle est ménagée chaque encoche d'indexation.

Ainsi, chaque encoche d'indexation est très facile à usiner sur la face de libération, sans aucune conséquence gênante à l'égard du guidage en rotation de la came.

Suivant d'autres caractéristiques optionnelles de cet antivol:
- le profil de la came comporte une partie dite de verrouillage, destinée à coopérer avec la contre-came principale pour maintenir la colonne dans un état verrouillé, cette partie de verrouillage étant délimitée par une surface sensiblement transversale de la came, dite face de verrouillage, décalée axialement par rapport à la face de libération ;
- le profil de la came comporte une rampe reliant les parties de libération et de verrouillage ;
- la came est destinée à coopérer, en fonctionnement dégradé, avec une contre-came de secours ;
- les contre-cames principale et de secours comportent des surfaces de contact avec le profil de la came qui, en fonctionnement normal, sont décalées axialement et radialement entre elles de façon que la contre came principale est en en appui sur le profil de la came alors que la contre-came de secours est maintenue à l'écart de la came ;
- la came est liée en rotation au rotor, chaque contre-came étant portée par une tirette liée en translation au pêne ;
- la contre-came principale est formée par un doigt rapporté sur la tirette ;
- le doigt est articulé sur la tirette, autour d'un axe sensiblement orthogonal à l'axe de rotation du rotor, et est rappelé élastiquement en contact avec le profil de la came ;
- la contre-came de secours est formée par un ergot venu de matière avec la tirette ;
- la tirette est rappelée élastiquement vers une position d'appui axial de chaque contre-came sur le profil de la came ;
- le rotor est destiné à actionner un commutateur électrique à plusieurs positions.

L'invention sera mieux comprise à la lecture de la description qui va suivre, donnée uniquement à titre d'exemple et faite en se référant aux dessins dans lesquels :
- la figure 1 est une vue en coupe transversale d'un antivol pour véhicule automobile selon l'invention ;
- la figure 2 est une vue en coupe de l'antivol représenté sur la figure 1 ;
- la figure 3 est une vue en perspective de la came de l'antivol représenté sur les figures précédentes.

On a représenté sur les figures un antivol pour véhicule automobile, selon l'invention, désigné par la référence générale 10. L'antivol 10 est destiné à commander le verrouillage d'une colonne de direction du véhicule et le démarrage d'un moteur de ce véhicule.

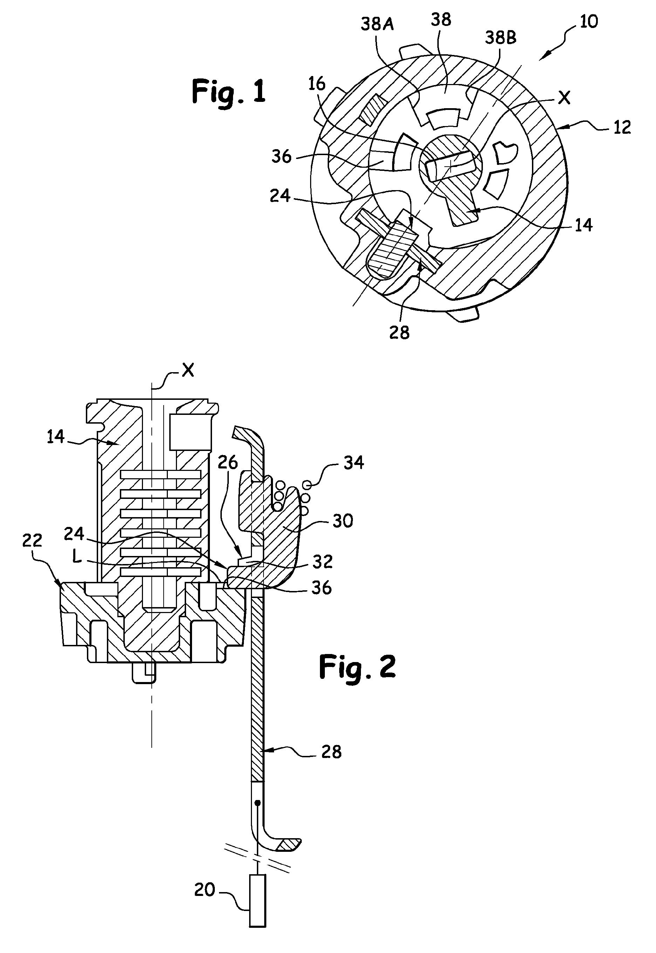

En se référant à la figure 1, on voit que de façon classique, l'antivol 10 comprend un stator 12 et un rotor 14 monté tournant dans le stator 12 autour d'un axe X parallèle à une direction dite axiale. Le rotor 14 est muni d'un logement 16 pour une clé de commande classique (non représentée) destinée à manoeuvrer ce rotor 14.

Pour commander divers organes du véhicule dont le moteur, le rotor 14 est relié à un commutateur électrique classique à plusieurs positions (non représenté). Ainsi, le rotor 14, conjointement avec le commutateur électrique, peut être placé dans une première position angulaire extrême de repos, dite position "stop", une première position angulaire intermédiaire, dite position "accessoires", une seconde position angulaire intermédiaire, dite position "marche", et une seconde position angulaire extrême, opposée à la première position extrême, dite position "démarrage". Les positions "stop", "accessoires", "marche" et "démarrage" se succèdent lorsque le rotor est déplacé de sa première position angulaire extrême vers sa seconde position angulaire extrême.

L'antivol 10 comprend également un pêne 20, schématisé sur la figure 2, permettant le verrouillage de la colonne de direction. Le pêne 20 est déplaçable en translation entre des positions correspondant à des états libéré et verrouillé de la colonne, dites positions rentrée et sortie. Le pêne 20 est rappelé élastiquement vers sa position sortie par des moyens classiques.

L'antivol 10 comprend encore des moyens classiques, non représentés, qui, lorsque le rotor 14 est dans la position "stop", autorisent l'introduction de la clé de commande dans le logement 16 et le retrait de la clé de ce logement 16 et, lorsque le rotor 14 est dans une position distincte de la position "stop", interdisent le retrait de la clé du logement 16.

Le rotor 14 est couplé au pêne 20 à l'aide de moyens de transformation du mouvement de rotation de ce rotor 14 en mouvement de translation de ce pêne 20.

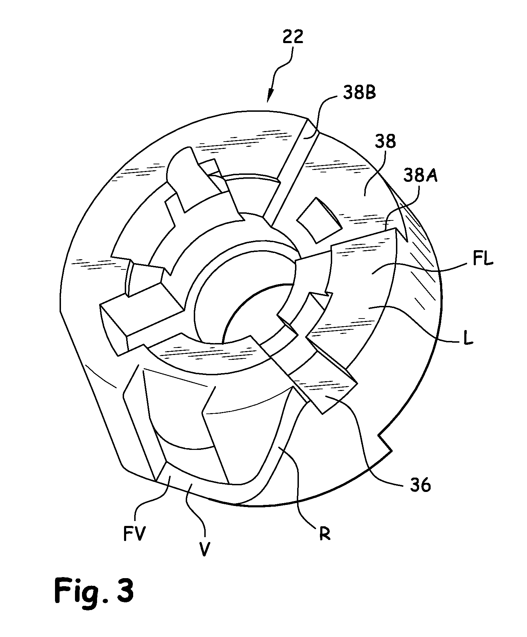

En se référant notamment aux figures 2 et 3, on voit que les moyens de transformation de mouvement comprennent une came 22 destinée à coopérer, en fonctionnement normal, avec une contre-came principale 24 et, en fonctionnement dégradé avec une contre-came de secours 26.

Dans l'exemple représenté sur les figures, la came 22 est liée en rotation au rotor 14.

De préférence, la came a une forme générale de révolution autour de l'axe X. La came 22 est munie d'un profil de coopération avec les contre-cames principale 24 et de secours 26 évoluant axialement selon des caractéristiques particulières à l'invention qui seront décrites ci-dessous et des caractéristiques générales décrites notamment dans FR-A-2 788 477 (FR-99 00401) et FR-A-2 799 426 (FR-99 11635).

En se référant notamment à la figure 3, on voit que le profil de la came 22 comporte une partie L, dite de libération, délimitée par une surface sensiblement transversale de la came, dite face de libération FL.

La partie de libération L du profil est destinée à coopérer avec la contre-came principale 24 pour maintenir la colonne de direction dans un état libéré.

Le profil de la came 22 comporte également une partie V, dite de verrouillage, délimitée par une surface sensiblement transversale de la came, dite face de verrouillage FV. Cette face de verrouillage FV est décalée axialement par rapport à la face de libération FL.

La partie de verrouillage V du profil est destinée à coopérer avec la contre-came principale 24 pour maintenir la colonne de direction dans un état verrouillé.

Le profil de la came 22 comporte encore une rampe R reliant les parties de libération L et de verrouillage V.

La contre-came principale 24 et la contre-came de secours 26 sont portées par une tirette 28 montée coulissante dans le stator 12. La tirette 28, de préférence métallique, est liée, de façon connue en soi, au pêne 20, comme cela est schématisé sur la figure 2. Les contre-cames principale 24 et de secours 26 sont solidaires en translation de la tirette 28.

Dans l'exemple illustré, la contre-came principale 24 est formée par un doigt 30, rapporté sur la tirette 28 alors que la contre-came de secours 26 est formée par un ergot 32 venu de matière avec la tirette 28.

Le doigt 30 est articulé sur la tirette 28, de façon connue en soi, autour d'un axe sensiblement orthogonal à l'axe X de rotation du rotor 14. Le doigt 30 est rappelé élastiquement en contact avec le profil de la came 22 par un ressort de poussée 34.

La tirette 28 est rappelée élastiquement vers une position d'appui axial de chaque contre-came 24, 26 sur le profil de la came 22 à l'aide de moyens classiques, non représentés.

On notera que les contre-cames principale 24 et de secours 26 comportent des surfaces de contact avec le profil de la came 22 qui, en fonctionnement normal, sont décalées axialement et radialement entre elles de façon que la contre-came principale 24 est en appui sur le profil de la came 22 alors que la contre-came de secours 26 est maintenue à l'écart de cette came 22.

En cas de destruction de la contre-came principale 24, la contre-came de secours 26 est rappelée automatiquement en appui contre le profil de la came 22. Ainsi, la contre-came de secours 26 remplace automatiquement la contre-came principale 24.

Lorsque le rotor 14 est dans l'une des positions "accessoires", "marche" ou "démarrage", la contre-came principale 24 est en appui sur la partie de libération L du profil de la came 22, comme cela est représenté sur la figure 2.

Cette partie de libération L du profil de la came 22 comporte des première 36 et seconde 38 encoches, ménagées dans la face de libération FL, destinées à coopérer, en fonctionnement normal, avec la contre-came principale 24 et, en fonctionnement dégradé, avec la contre-came de secours 26, pour indexer la position du rotor 14. Ainsi, la position "accessoires" du rotor 14 est indexée par la première encoche d'indexation 36. Par contre, la seconde encoche d'indexation 38 est munie d'un premier bord angulaire 38A indexant la position "marche" et d'un second bord angulaire 38B.

On notera que la contre-came principale 24 ou de secours 26 coopère avec chaque en coche d'indexation 36, 38 sur une course angulaire de ce rotor 14 ne modifiant pas l'état libéré de la colonne de direction. En effet, le déplacement axial de la tirette 28 lors du passage de la contre-came principale 24 ou de secours 26 dans l'une des encoches d'indexation 36, 38 est relativement faible si bien qu'il ne modifie pas l'état de la colonne de direction.

On précisera ci-dessous les principaux aspects du fonctionnement de l'antivol 10 liés à l'invention.

On considère initialement le rotor 14 en position "stop", la colonne de direction étant verrouillée. Dans cette position "stop", une clé de commande peut être introduite dans le logement 16 du rotor 14 par un utilisateur souhaitant faire fonctionner l'antivol. La contre-came principale 24 est en appui sur la partie de verrouillage V du profil de la came 22.

Le déplacement du rotor 14 successivement dans les positions "accessoires", "marche" et "démarrage" a pour effet de déplacer la contre-came principale 24 au contact du profil de la came 22.

Lorsque le rotor est en position "stop", la contre-came principale est emboîtée dans la première encoche 36 d'indexation de cette position "stop", comme cela est représenté sur la figure 2.

Le déplacement du rotor 14 de la position "accessoires" vers la position "marche" a pour effet de déplacer la contre-came principale 24 de la première encoche 36 jusqu'à la seconde encoche 38. Le premier bord angulaire 38A ce cette seconde encoche coopère alors avec la contre-came principale 24 pour indexer la position "marche" du rotor 14.

Pendant le fonctionnement normal de l'antivol, la contre-came de secours 26 n'est pas en contact avec le profil de la came 22.

Si la contre-came principale 24 est détruite, la contre-came de secours 26 est alors automatiquement sollicitée en appui contre le profil de la came 22 et coopère avec les encoches d'indexation 36, 38 de façon analogue à la contre-came principale 24.

L'invention ne se limite pas au mode de réalisation décrit ci-dessus.

En particulier, un antivol selon l'invention peut comporter une encoche d'indexation ménagée dans une partie quelconque du profil de la came 22, à savoir dans la partie de libération L du profil, comme dans l'exemple illustré, mais éventuellement dans la partie de verrouillage V du profil, dans la mesure où le passage dans l'encoche d'indexation de la contre-came principale 24 ou de secours 26 ne modifie pas l'état de la colonne de direction par rapport à l'état souhaité de cette colonne lorsque le rotor est dans la position indexée par l'encoche.

## Revendications

1. Antivol pour véhicule automobile, du type comprenant :
- un stator (12),
- un rotor (14) monté tournant dans le stator (12) entre des première et seconde positions angulaires extrêmes,
- un pêne (20) de verrouillage d'une colonne de direction du véhicule, déplaçable en translation entre des positions correspondant à des états libéré et verrouillé de la colonne, et
- des moyens de transformation du mouvement de rotation du rotor (14) en mouvement de translation du pêne (20), couplant ces rotor (14) et pêne (20), comprenant une came (22) destinée à coopérer, en fonctionnement normal, avec une contre-came principale (24) rappelée élastiquement en appui sur le profil de la came (22),
**caractérisé en ce que** le profil de la came (22) comporte au moins une première encoche (36, 38) destinée à coopérer avec la contre-came principale (24) pour indexer la position du rotor (14) sur une course angulaire de ce rotor (14) ne modifiant pas l'état de la colonne.

2. Antivol selon la revendication 1, **caractérisé en ce que**, entre ses première et seconde positions extrêmes, dites positions "stop" et "démarrage", le rotor (14) peut être placé dans une première position angulaire intermédiaire, dite position "accessoires", indexée par la première encoche (36).

3. Antivol selon la revendication 2, **caractérisé en ce que**, entre ses première position intermédiaire et seconde position extrême, le rotor (14) peut être placé dans une seconde position angulaire intermédiaire, dite position "marche", la came (22) comportant une seconde encoche (38) d'indexation munie d'un premier bord angulaire indexant la position "marche".

4. Antivol selon l'une quelconque des revendications 1 à 3, **caractérisé en ce que** la came (22) a une forme générale de révolution, le profil de la came (22) évoluant axialement et comportant une partie dite de libération (L), destinée à coopérer avec la contre-came principale (24) pour maintenir la colonne dans un état libéré, cette partie de libération (L) étant délimitée par une surface sensiblement transversale de la came (22), dite face de libération (FL), dans laquelle est ménagée chaque encoche d'indexation (36, 38).

5. Antivol selon la revendication 4, **caractérisé en ce que** le profil de la came (22) comporte une partie dite de verrouillage (V), destinée à coopérer avec la contre-came principale (24) pour maintenir la colonne dans un état verrouillé, cette partie de verrouillage (V) étant délimitée par une surface sensiblement transversale de la came (22), dite face de verrouillage (FV), décalée axialement par rapport à la face de libération (FL).

6. Antivol selon les revendications 4 et 5 prises ensemble, **caractérisé en ce que** le profil de la came (22) comporte une rampe (R) reliant les parties de libération et de verrouillage.

7. Antivol selon l'une quelconque des revendications précédentes, **caractérisé en ce que** la came (22) est destinée à coopérer, en fonctionnement dégradé, avec une contre-came de secours (26).

8. Antivol selon la revendication 7, **caractérisé en ce que** les contre-cames principale (24) et de secours (26) comportent des surfaces de contact avec le profil de la came (22) qui, en fonctionnement normal, sont décalées axialement et radialement entre elles de façon que la contre came (22) principale (24) est en en appui sur le profil de la came (22) alors que la contre-came de secours (26) est maintenue à l'écart de la came (22).

9. Antivol selon l'une quelconque des revendications précédentes, **caractérisé en ce que** la came (22) est liée en rotation au rotor (14), chaque contre-came (24, 26) étant portée par une tirette (28) liée en translation au pêne (20).

10. Antivol selon la revendication 9, **caractérisé en ce que** la contre-came principale (24) est formée par un doigt (30) rapporté sur la tirette (28).

11. Antivol selon la revendication 10, **caractérisé en ce que** le doigt (30)est articulé sur la tirette (28), autour d'un axe sensiblement orthogonal à l'axe de rotation du rotor (14), et est rappelé élastiquement en contact avec le profil de la came (22).

12. Antivol selon la revendication 7 prise ensemble avec l'une quelconque des revendications 9 à 11, **caractérisé en ce que** la contre-came de secours (26) est formée par un ergot (32) venu de matière avec la tirette (28).

13. Antivol selon l'une quelconque des revendications 9 à 12, **caractérisé en ce que** la tirette (28) est rappelée élastiquement vers une position d'appui axial de chaque contre-came (24,26) sur le profil de la came (22).

14. Antivol selon l'une quelconque des revendications précédentes, **caractérisé en ce que** le rotor (14) est destiné à actionner un commutateur électrique à plusieurs positions.
